# EUROPEAN PATENT APPLICATION

(11) **EP 1 097 951 A2**
(43) Date of publication of application: **09.05.2001**
(21) Application number: 00120735.6
(22) Date of filing: 22.09.2000
(51) Int. Cl.: C08F 279/02, C08L 55/00, B29D 30/54

(54) **Tyre cushion made of synthetic rubber blend**

(30) Priority: 05.10.1999 US 412955
(71) Applicant: THE GOODYEAR TIRE & RUBBER COMPANY, Akron, Ohio 44316-0001 (US)
(72) Inventor: Cowling, Teddy Ben, Akron, OH 44313 (US); Majumdar, Ramendra Nath, Hudson, OH 44236 (US); White, John Richard, Wadsworth, OH 44281 (US)
(74) Representative: Leitz, Paul

(57) **Abstract**

An extruded, uncured high synthetic rubber blend tire cushion (30) is directly applied to a tire carcass (20). A cured tire tread (40) can be applied to the cushion and spliced. The resulting tire assembly is then cured by heating to form a retreaded tire (10).

## Description

### Field Of Invention

A tire cushion is applied to a tire carcass by extruding a high synthetic rubber blend thereto.

### Background Of The Invention

Heretofore, tire cushions have been applied to tire carcass to adhere the carcass rubber to a cured tread. However, the tire cushion has typically been in the form of a calendered natural rubber strip or layer. Recently, natural rubber tire cushions have been extruded onto a tire carcass for use in a retread tire.

### Summary Of The Invention

The present invention provides to extrude a high synthetic rubber blend onto a tire carcass for use as a tire cushion in a retreaded tire as defined in the appended claims.

### Brief Description Of The Drawing

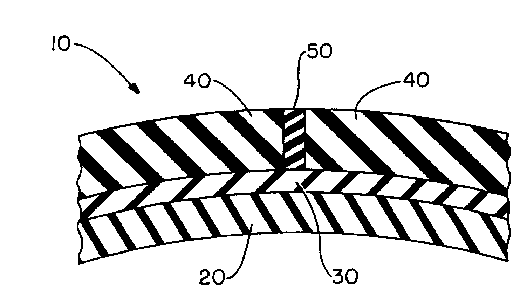

FIGURE 1 is a partial cross sectional, schematic view of a retread tire containing a high synthetic rubber blend cushion therein.

### Detailed Description Of The Invention

As shown in the drawing, retread tire 10 generally contains rubber carcass 20 of a used tire. A tire cushion 30, in general, adheres a cured tire tread 40 to the tire carcass. Tread splice 50 bonds the two ends of the cured tire tread together.

The tire carcass can be any used tire, such as an aircraft tire or a truck tire with the tread of which has been worn. In order to obtain good adhesion of the tire cushion to the carcass, the carcass is generally buffed or roughened.

It has been unexpectedly found that a high synthetic rubber blend tire cushion can be extruded and form a suitable tire cushion for adhering cured carcass 20 to cured tire tread 40. Optionally, tread 40 can be uncured when applied.

By the term "high synthetic rubber blend" it is meant that the blend contains generally at least 40% by weight, desirably at least 50% by weight, and preferably at least 55% by weight of one or more synthetic rubbers based upon the total weight of said one or more synthetic rubbers and natural rubber. The synthetic rubber can be made from one or more conjugated dienes having from 4 to 12 carbon atoms, for example butadiene, isoprene, etc.; rubbers made from one or more conjugated diene monomers having from 4 to 12 carbon atoms with vinyl substituted aromatic monomer having from 8 to 12 carbon atoms such as styrene (e.g. styrene-butadiene rubber), alpha-methylstyrene, and the like.

While various high synthetic rubber blends can be utilized in the present invention for the tire cushion, a preferred rubber blend is that as set forth in US-A-5,503,940. This preferred high synthetic rubber blend contains one or more bis-imide compounds in suitable amounts to achieve improved blowout resistance, reduced heat generation, improved durability, and the like. The amount of such bis-imide compounds is generally at least 0.1 or 0.2, desirably from 0.3 to 5 or 10, and preferably from 0.5 to 2 or 3 parts by weight per 100 parts by weight of all rubber in the tire cushion composition.

The uncured high synthetic rubber blend tire cushions of the present invention desirably have high building tack. Depending upon the rubber blend formulation, the uncured tire cushion may inherently have high building tack or high building tack can be achieved by the use of one or more compatible tackifying agents utilized in effective amounts to promote high building tack and good cure tire adhesion with the cured tire carcass and the cured tire tread. Various tackifying agents include rosin and its derivatives, various hydrocarbon resins, as well as preferably various types of phenol-formaldehyde resins. Phenol-formaldehyde resins generally have a number average molecular weight of 2,000 or less. A detailed description of these tackifying agents is found in US-A- 5,503,940.

The various additives utilized in the preferred high synthetic rubber blend of the present invention include one or more reinforcing agents such as carbon black, a sulfur cure system including one or more cure accelerators, activators such as zinc oxide, stearic acid, along with various oils such as naphthenic oil, processing aids, stabilizers, antidegradants, antioxidants, antiozonants, and the like, all as set forth in US-A- 5,503,940. The high synthetic rubber blends of the present invention generally have high Mooney viscosity (ML 1+4) at 100°C of from 35 to 75 and often or desirably from 40 or 50, and more often from 60 to 70.

According to the present invention, a high synthetic rubber blend is extruded as a sheet or a layer and applied directly onto the tire carcass of a used or worn tire. That is, the extrudate is preferably applied directly to the tire carcass substantially free of, or without the use of any adhesive or other intermediate layer. Although an adhesive, etc., can be utilized, it is not desired inasmuch as such an adhesive is not necessary to obtain high building tack and good cured adhesion between the tire cushion and the tire carcass, and such adhesive often contains VOC's, such as a solvent, which is undesirable. Generally, any type of extruder can be utilized such as a multi-cut transfer mix extruder manufactured by Foreman AZ, or an NRM Orbigum Extruder, or an NRM Orbicushion Extruder. That a high synthetic rubber blend composition can be utilized as an extrudate and applied directly to the tire carcass was unexpected because of its high Mooney viscosity.

Desirably, the extrudate is applied to the tire carcass before the extrudate cools. That is, it is applied hot. Cured tire tread 40 can be applied to the tire cushion extrudate while the same is still hot or after it has cooled. The tread rubber can be vulcanized to the cushion and casing using a precure retread process. If the tread rubber is uncured, it can be vulcanized using a mold cure retread process. In the case of the precure retread process, the ends of the cured tire tread are spliced together. Retread tire 10 is then heated to cure the extruded tire cushion and bind the tire tread to the tire carcass. Adhesion values of at least 100 pounds per inch (18 kg/cm) of the extruded high synthetic rubber blend tire cushion of the present invention to the tire carcass is readily achieved.

The following examples serve to illustrate, but not to limit, the present invention.

Two 11R24.5 G328 worn tires were buffed and then retreaded utilizing a calendered all natural rubber cushion and a high-percentage synthetic rubber cushion. The composition of the high-percentage synthetic rubber cushion and the natural rubber cushion and their Mooney viscosities are set forth in Table I. The calendered cushion was applied by cementing the buffed casing, allowing the cement to dry, applying the calendered cushion circumferentially to the casing, removing the protective polyethylene film from the calendered cushion, applying a precured tread over the tire cushion, splicing the two ends of the cured tread and stitching the cured tread to the cushion and casing under direct pressure. The high-percentage synthetic rubber cushion was applied by extruding a synthetic rubber compound directly onto a tire casing by inserting a strip of high-synthetic rubber cushion material into the screw and barrel of a multi-cut transfer mix extruder, having a screw/barrel temperature of approximately 86°C to heat the high-synthetic cushion, and forcing the cushion compound through the head of the extruder to create a thin rubber sheet of material that is extruded directly onto a casing that is in direct contact with the head of the extruder. The tires were then tested and the results are set forth in Table II.

**TABLE I**

| | **High-Synthetic Cushion** | **All NR Cushion** |
|---|---|---|
| High Cis Polybutadiene | 60.00 | -- |
| Natural Rubber | 40.00 | 100.00 |
| Carbon Black | 50.00 | 40.00 |
| Tackifiers | 8.00 | 8.50 |
| Processing Oils | 6.50 | 11.00 |
| Antiox/Antioz | 1.50 | 3.00 |
| Perkalink® 900 | 1.50 | |
| Peptizer | -- | 0.30 |
| Mooney (ML 1+4) @ 100°C | 59.1 | 33.7 |

Additionally, conventional amounts of zinc oxide, fatty acids, retardants, insoluble sulfur, and accelerators such as sulfenamides, thiazoles, guanidines, thiurams, or dithiocarbamates were utilized.

**TABLE II**

| | **Control Tire** | **Invention** |
|---|---|---|
| **Cushion** | **Calendered all natural rubber- based cushion** | **High-percentage synthetic cushion applied by an extruder** |
| **Dynamic Heat Rise- Radial Medium Truck Tire Test** | | |
| | **Finish** | **Finish** |
| Temp-CR¹ °C | 99 | 105 |
| Temp-ISSR² °C | 108 | 107 |
| Temp-OSSR³ °C | 108 | 103 |

| **Dynamic High Speed - Radial Medium Drive Tire Test** | | |
|---|---|---|
| Run till step # | 7 | 7 |
| Min/kph | 15/140 | 22/140 |
| km | 588 | 644 |
| Step to 121+ °C | 4 | 4 |

| | | |
|---|---|---|
| 1. CR = crown temperature | | |
| 2. ISSR = inside serial side rib temperature | | |
| 3. OSSR = outside serial side rib temperature | | |

As apparent from Table II, the extruded high-percentage synthetic cushion applied by an extruder in accordance with the present invention, essentially yields the same test results as a calendered applied natural rubber cushion.

## Claims

1. A process for applying a tire cushion (30) to a tire carcass (20) for a retread tire (10), characterized by comprising the steps of:
extruding a synthetic rubber-natural rubber blend having a high Mooney viscosity;
directly applying said extrudate as a tire cushion to the tire carcass; and
curing said tire cushion;
wherein said synthetic rubber-natural rubber blend contains at least 40% by weight of synthetic rubber therein based upon the total weight of said synthetic-natural rubber blend.

2. The process according to Claim 1, characterized in that said rubber blend for said cushion has a Mooney viscosity (ML 1+4) at 100°C of at least 35.

3. A process according to Claim 1, characterized in that said synthetic rubber is polybutadiene.

4. A process according to any of the preceding claims characterized in that said synthetic rubber contains a bis-imide compound, and wherein said bis-imide compound has the formula 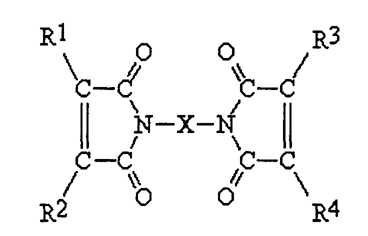 where R¹, R², R³, and R⁴, independently, are hydrogen, an alkyl group having from 1 to 5 carbon atoms, a phenyl group, an alkylphenyl group having 7 to 10 carbon atoms or a halogen substituted alkyl group having from 1 to 5 carbon atoms, a halogen substituted phenyl group, or a halogen substituted alkyphenylene group having a total of from 7 to 10 carbon atoms, and where X is an alkylene group having from 1 to 5 carbon atoms, a phenylene group, an alkylphenylene or alkylenephenyl group having 7 to 10 carbon atoms or a halogen substituted alkylene group having from 1 to 5 carbon atoms, a halogen substituted phenylene group, or a halogen substituted alkylphenylene or alkylenephenyl group having a total of from 7 to 10 carbon atoms, wherein the amount of said bis-imide compound is from 0.1 to 10 parts by weight per 100 parts by weight of said cushion vulcanizable elastomer.

5. The process according to any of the preceding claims further characterized by applying a tire tread to said tire cushion prior to curing said cushion.
